# EUROPEAN PATENT APPLICATION

(11) **EP 2 886 855 A1**
(43) Date of publication of application: **24.06.2015**
(21) Application number: 13197644.1
(22) Date of filing: 17.12.2013
(51) Int. Cl.: F03D 11/00, F03D 3/06

(54) **Vertical axis wind turbine, metallic segmented blade and manufacturing method**

(71) Applicant: Perpend AB, 524 31 Herrljunga (SE)
(72) Inventor: Gustafsson, Roland, 524 31 Herrljunga (SE)
(74) Representative: Valea AB

(57) **Abstract**

The embodiments herein relate to a turbine (100) comprising a rotation axis substantially at right angle to the wind direction. The rotor comprises at least one blade (101) joined to a central point of the rotor by at least one strut (105), and the at least one blade (101) comprises at least one airfoil shaped segment (201).

## Description

### TECHNICAL FIELD

Embodiments herein relate generally to a turbine, a system comprising a plurality of turbines, a segment and a method of manufacturing the segment.

### BACKGROUND

A turbine may be described as a device which converts kinetic energy from a fluid flow into electrical power. A turbine may be e.g. a horizontal axis turbine or a vertical axis turbine. A horizontal axis turbine generates power through rotation of a rotor about a horizontal central shaft (horizontal relative to the ground) and must be directed in the direction of the fluid flow. A vertical axis turbine generates power through rotation of the rotor about a vertical central shaft (vertical relative to the ground). A vertical axis turbine does not need to be directed into the fluid flow to be effective, which is an advantage on a site where the fluid flow direction is highly variable. Furthermore, the vertical axis turbine does not need a pitch or yawing mechanism and has few moving and sensitive parts compared to a horizontal turbine - resulting in a very good life time economy. The fluid may be wind, gas, liquid etc.

A turbine is a dynamic structure that constantly undergoes structural deformations depending on the fluid flow dynamics. Several variable external factors such as blade surface roughness and background turbulence add further to the complexity. The dynamic loading on the blades of the turbine, as they rotate about the central point of the rotor and travel through a range of relative angles of attack (and thus lift and drag), does produce significant deflection of the turbine blades.

A vertical axis wind turbine, abbreviated VAWT, is a turbine used when the fluid flow is wind. Such a turbine is, due to its Omni-directional characteristics, inherently capable to deal with unsteady turbulent fluid flows, i.e. winds, experienced in urban and suburban environments. The lack of high blade tip-speed significantly reduces any generation of noise. An integral positive torque may produce a net power output of the turbine which is directly proportional to the torque generated by the turbine (although reduced by losses in transmission and generator etc.). Basically, wind turbines convert the kinetic energy of the wind into mechanical energy, and then into electricity.

The development of turbines has increased demand for higher and higher power generation. This increases the sizes of the turbine blades. With the increased size of turbine blades, the weight of the turbine blade has become an important factor. Therefore, the selection of the material to be used in the blades needs to be carefully considered. Turbine blades may be made of aluminum, fiberglass, lightweight wood, different types of composites etc. However, these materials have their drawbacks related to strength, the need for maintenance, weight, price, performance etc.

It has long been recognized that sandwich structures, composed of stiff outer layers held apart by a low density core, offer the potential for very high specific stiffness and other attractive mechanical properties. Most such structures are created by an assembly process of some sort, before or during component manufacture. This severely limits the flexibility of the production process and is relatively expensive.

### SUMMARY

An objective of embodiments herein is therefore to obviate at least one of the above disadvantages and to provide an improved turbine and an improved segment.

According to a first aspect, the object is achieved by a turbine comprising a rotor that is arranged to rotate in a plane that is perpendicular to the surface on which the turbine is mounted when in use. The rotor comprises at least one blade joined to a central point of the rotor by at least one strut. The at least one blade comprises at least one airfoil shaped segment.

According to a second aspect, the object is achieved by a system comprising a plurality of turbines. The plurality of turbines is connected together via a central point. The at least one blade on each turbine is horizontally shifted in relation to the at least one blade of the adjacent turbine(s).

According to a third aspect, the objective is achieved by a segment comprising a core metal material arranged between a non-corrugated metal sheet and a corrugated metal sheet.

According to a fourth aspect, the objective is achieved by a method for manufacturing a segment, the method comprising:
arranging a core metal material between a non-corrugated metal sheet and a corrugated metal sheet.

Thanks to the arrangement of the turbine and the segment described above, an improved turbine and an improved segment is obtained.

### BRIEF DESCRIPTION OF THE DRAWINGS

The embodiments herein will now be further described in more detail in the following detailed description by reference to the appended drawings illustrating the embodiments and in which:
- Fig. 1: is a schematic drawing illustrating an embodiment of a turbine.
- Fig. 2a-2b: are schematic drawings illustrating embodiments of a blade.
- Fig. 3a-3c: are schematic drawings illustrating embodiments of a section of an airfoil shaped segment.
- Fig. 3d: is a schematic drawing illustrating embodiments of a complete segment.
- Fig. 3e: is a schematic drawing illustrating an embodiment of a two airfoil shaped segments connected together.
- Fig. 4a: is a schematic drawing illustrating a back view of an embodiment of a strut.
- Fig. 4b: is a schematic drawing illustrating a top view of an embodiment of a strut.
- Fig. 5a: is a schematic drawing illustrating a top view of an embodiment of a disk.
- Fig. 5b: is a schematic drawing illustrating a side view of an embodiment of a disk.
- Fig. 6: is a schematic drawing illustrating an embodiment of a turbine assembled in a frame.
- Fig. 7a: is a schematic drawing illustrating a side view of an embodiment of a system.
- Fig. 7b: is a schematic drawing illustrating a top view of an embodiment of a system.
- Fig. 8a-8b: are schematic drawings illustrating embodiments of a segment.
- Fig. 8c: is a schematic drawing illustrating an embodiment of an airfoil shaped segment.
- Fig. 9: is a flow chart illustrating embodiments of a method for manufacturing a segment.

The drawings are not necessarily to scale and the dimensions of certain features may have been exaggerated for the sake of clarity. Emphasis is instead placed upon illustrating the principle of the embodiments herein.

### DETAILED DESCRIPTION

The embodiments herein relate to a turbine for the generation of renewable energy from a fluid flow, a system, a segment and a method for manufacturing the segment. The fluid flow may be wind, gas, liquid etc.

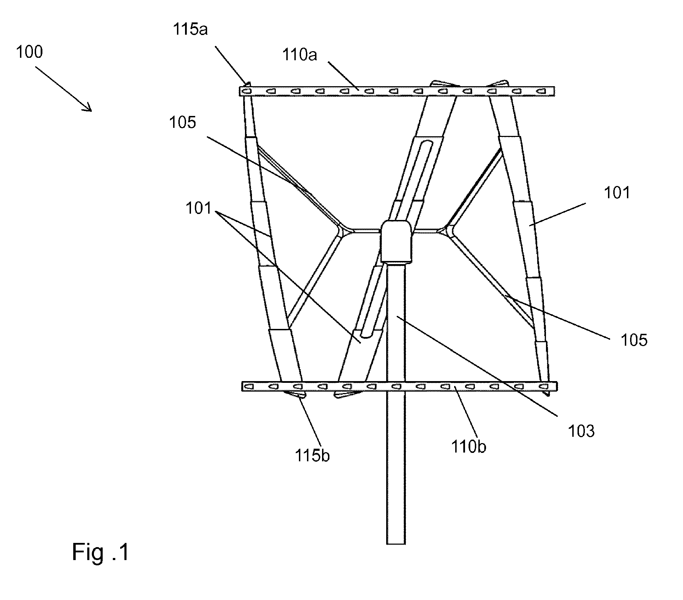

**Figure 1** illustrates an embodiment of a **turbine 100.** The turbine 100 comprises a rotor that is arranged to rotate in a plane that is perpendicular to the surface on which the turbine 100 is mounted when in use. If the turbine 100 is mounted on the ground, the turbine 100 may be described as being perpendicular to the ground. This may also be described as the turbine being substantially vertical relative to the ground. The turbine 100 may therefore also be referred to as a vertical axis turbine. If the fluid flow is wind, the turbine 100 may be referred to as a wind turbine or a vertical axis wind turbine. A turbine may have a certain diameter, such as e.g. 5m or 11 m. All components of the turbine 100 may comprise stainless steel. The turbine 100 may be mounted on a tower (not shown).

### Blades

The rotor of the turbine 100 comprises at least one **blade 101.** The blade 101 is joined to a central point of the rotor by at least one **strut 105.** A blade 101 may also be referred to as a wing, an airfoil or an aerofoil.

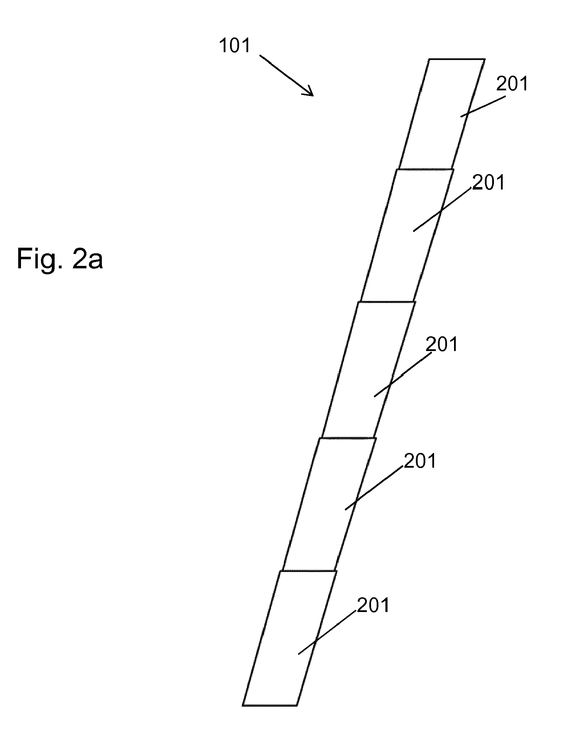

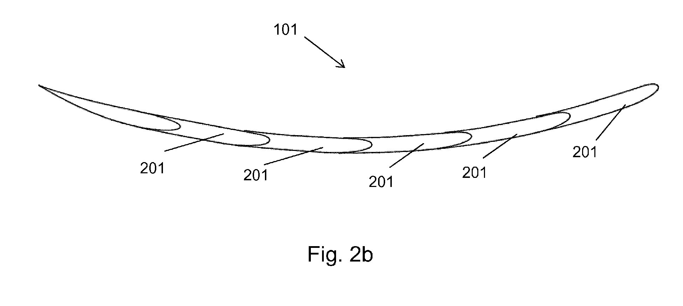

The blade 101 comprises at least one airfoil shaped **segment 201** as seen in **Figure 2a** and **Figure 2****b.** In figures 2a and 2b, the blade 101 is exemplified to comprise five segments 201. However, any other suitable number of segments 201 is applicable. In the embodiments where the blade 101 comprises a plurality of segments 201, the blade 101 may be referred to as having a modular design. The modular design makes it possible to build turbines 100 in different sizes. For example, five segments 201 of each having a length of 1 m provide a blade 101 with a total length of 5m.

Since the segment 201 is airfoil shaped, the blade 101 is consequently also airfoil shaped. An airfoil shape is a shape that provides lift, propulsion, stability, or directional control to the turbine 100 by making use of the fluid flow currents through which the turbine 101 moves. The lift on an airfoil shaped body is primarily the result of its angle of attack and shape. When oriented at a suitable angle, the airfoil shaped body deflects the oncoming fluid flow, resulting in a force on the airfoil shaped body in the direction opposite to the deflection. This force is may be resolved into two components: lift and drag. In an example where the fluid flow is wind, the force is an aerodynamic force.

A blade 101 with an airfoil shape may have a rounded leading edge which is the edge at the front of the blade 101 that has maximum curvature. The blade 101 also has a sharp trailing edge which is the edge that has maximum curvature at the rear of the blade 101. The chord line is a straight line connecting the leading and trailing edges of the blade 101. The airfoil shaped blades 101 may be helical or spirally shaped. The blade 101 is arranged so that the fluid flow hits the leading edge when the blade 101 is in use.

In the embodiment illustrated in figure 1, the turbine 100 comprises three blades 101, but the turbine 100 may comprise any other suitable number of blades 101. In embodiments where the turbine 100 comprises a plurality of blades, the plurality of blades 101 may be seen as being circumferentially spaced from each other and joined to the central point of the rotor.

Returning to figure 1, the blade 101 may comprise a **first end 115a** and a **second end 115b.**

In some embodiments, each blade 101 may be tilted for example at an angle of preferably between 0°-30°, more preferably between 5°-25°, more preferably between 10°-20°, even more preferably between 14°-18°, and preferably 16°. The tilt of the blades 101 may be with respect to the plane that is perpendicular to the surface on which the turbine 100 is mounted. The angle may vary with the number of blades 101, the size of the turbine 100 or a combination of both in order to optimize a smooth or turbulence-free rotation of the turbine 100 and to avoid a saw rotation.

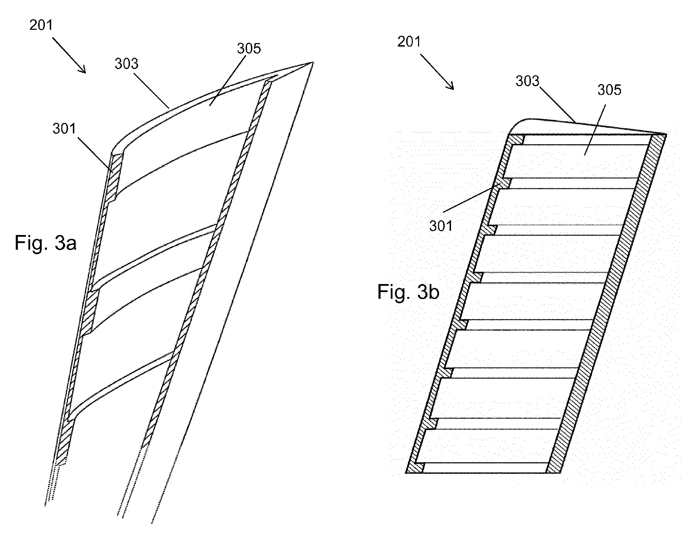

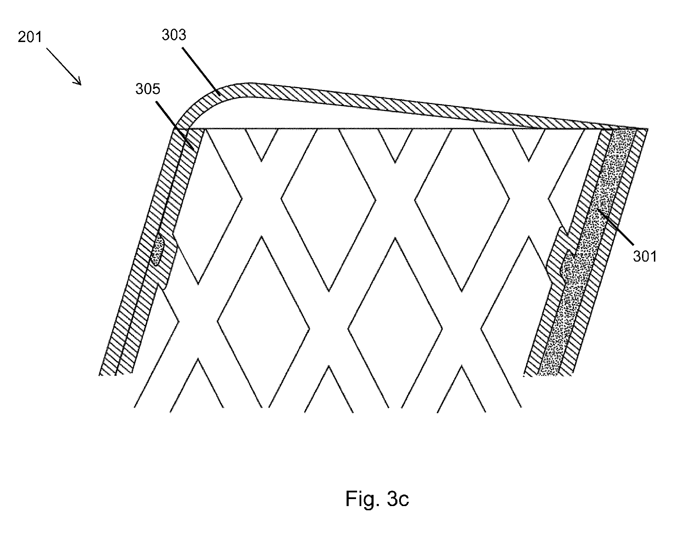

The at least one airfoil shaped segment 201 comprises a **core metal material 301** located between a **non-corrugated metal sheet 303** and a **corrugated metal sheet 305,** as seen in **Figure 3a, Figure 3b** and **Figure 3c****.** Figures 3a, 3b and 3c illustrate only a section of a complete airfoil shaped segment 201. The non-corrugated metal sheet 303 constitutes the outer surface of the airfoil shaped segment 201 and the corrugated metal sheet 305 constitutes the inner surface of the airfoil shaped segment 201. In Figures 3a and 3b the core metal material 301 is represented by the hatched sections, and represented by dotted sections in figure 3c. The core metal material 301 may be a core metal material lattice structure. A lattice structure is intended to mean any regular or non-regular framework of crossing or non-crossing metal strips, whereby a strip may be of any uniform or non-uniform shape and/or thickness. The core metal material lattice structure does not necessarily fill the space between the non-corrugated metal sheet 303 and the corrugated metal sheet 305, but may comprise voids or pores between the core metal material 301. The lattice structure may also be referred to as a pattern The core metal material 301, as seen in figures 3a and 3b, may be a grid of core metal material 301 as seen in figure 3c, or any other suitable lattice structure.

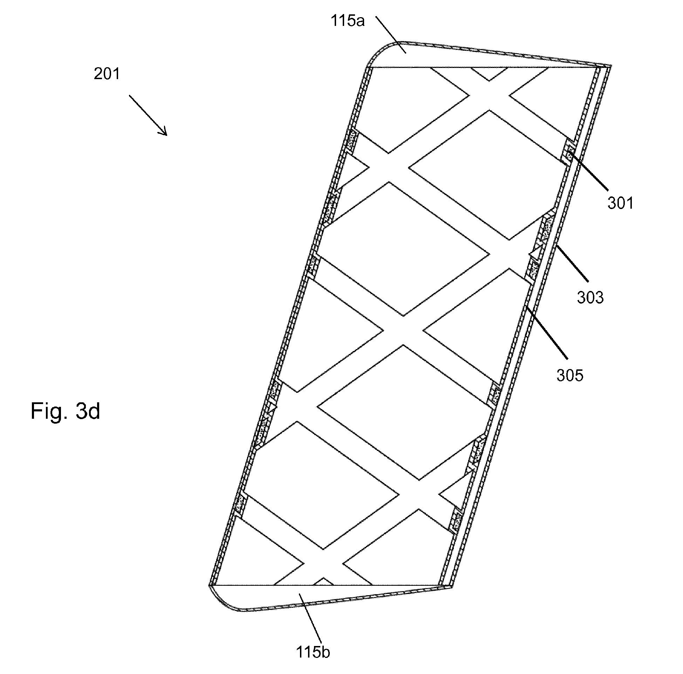

**Figure 3d** is a schematic illustration of a complete airfoil shaped segment 201. Similar to figure 3c, the core metal material 301 is represented by dotted sections in figure 3d. As seen in figure 3d, the complete segment 201 is symmetric and each ends 115a, 115b have the same shape. The segment 201 seen in figure 3d may be adapted depending on whether the blade 101 comprises one or more segments 201, i.e. whether the segment 201 constitutes the whole blade 101, where the segment 201 is an end or middle segment 201 in a blade 101 comprising a plurality of segments 201.

In an embodiment where the blade 101 comprises only one airfoil shaped segment 201, the whole segment 201 has an airfoil shape comprising the two ends 115a, 115b, as illustrated in figure 3d. In other words, the shape of the segment 201 does not have to be modified after having been manufactured in order for the segment 201 to be used in the turbine 100.

In another embodiment, the blade 101 may comprise e.g. two airfoil shaped segments 201, i.e. a first segment 201 and a second segment 201. In such embodiment, the first segment 201 comprises the first end 115a and the second segment 201 comprises the second end 115b. The second end 115b of the first segment 201 needs to be modified e.g. by removing the second end 115b or by reshaping the second end 115b in order for it to be connectable to the second segment 201. Similarly, the first end 115a of the second segment 201 also needs to be modified in order to be connectable to the first segment 201. The first end 115a of the first segment 201 and the second end 115b of the second segment 201 are not necessarily modified in such embodiment where the blade 101 comprises two airfoil shaped segments 201.

In another embodiment, the blade 101 may comprise three or more airfoil shaped segments 201, i.e. a first end segment 201, at least one middle segment 201 and a second end segment 201. The first end segment 201 comprises the first end 115a and the second end segment 201 comprises the second end 115b. The middle segment(s) 201 does not comprise either of the first end 115a or the second end 115b, and both ends 115a, 115b of the complete segment 201 shown in figure 3d then needs to be modified. The first and second end segments in a blade 101 comprising three or more airfoil shaped segments 201 needs to be modified in the same way as described above for the embodiment where the blade 101 comprises two airfoil shaped segments 201.

Thus, a segment 201 is manufactured with the same shape regardless of whether it is an end segment 201 or a middle segment 201. After manufacturing, each segment 201 is modified depending on whether it is an end segment or a middle segment 201. As a result of this, only one tool is necessary for manufacturing the segment 201, regardless of whether the segment 201 is an end segment 201 or a middle segment 201, which provides a significantly lower manufacturing cost compared to having separate tools for manufacturing an end segment 201 and a middle segment 201.

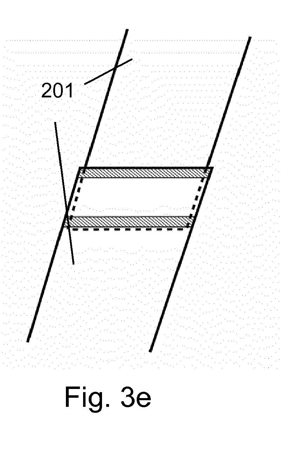

**Figure 3e** shows an embodiment of how two segments 201 may be connected together. The lines in figure 3e represent the overlapping of the two segments 201. One segment 201 is inserted into the other segment with sliding fit, and the segments 201 are locked to each other with two strings of laser welding. The segments 201 may obtain different end designs by e.g. hydroforming or electrohydraulic forming. For example, the first end 115a of one segment 201 may be expanded and the second end 115b of the other segment 201 may be contracted such that the contracted second end 115b may be slid into the expanded first end 115a.

Hydroforming is a method for shaping metals such as aluminum, brass, low alloy steels and stainless steel into lightweight, structurally stiff and strong elements. Electrohydraulic forming is a type of metal forming in which an electric arc discharge in liquid is used to convert electrical energy to mechanical energy and change the shape of the workpiece.

The segment 201 may be referred to as being a sandwich segment or a laminated segment, i.e. a segment comprising a plurality of layers improving e.g. strength and stability compared to a single layer segment.

The core metal material 301, the non-corrugated metal sheet 303 and the corrugated metal sheet 305 may comprise stainless steel.

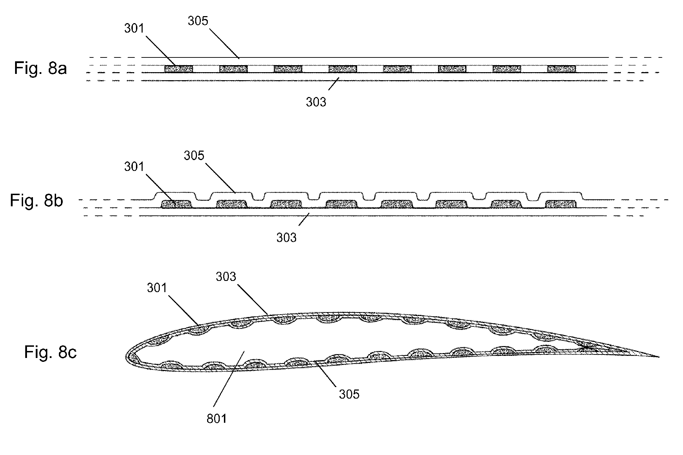

The segment 201 will be described in more detail below with reference to figures 8a, 8b and 8c.

### Shaft

The turbine 100 may comprise a **shaft 103,** as seen in Figure 1, and the central point of the rotor may be located on the shaft 103. The shaft 103 may be perpendicular to the surface on which the turbine 101 is mounted when in use. The shaft 103 may be described as a vertical shaft, where it is vertical with respect to the surface on which the turbine 101 is mounted when in use. In some embodiments, the shaft 103 is referred to as a central shaft.

The shaft 103 may be of any suitable shape, size and length. For example, the shaft 103 may be circular, it may be oval etc.

### Strut

As mentioned above, each blade 101 is joined to a central point of the rotor by at least one strut 105.

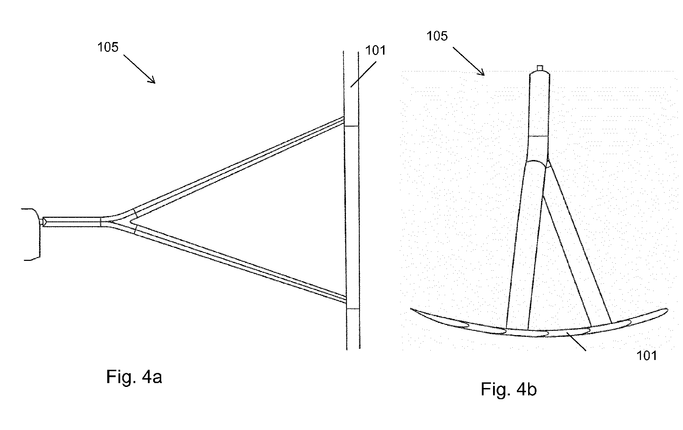

A strut 105 may also be referred to as an arm, a support, a spoke etc. The at least one strut 105 may be a radial strut and it may for example be a straight rod, a twisted rod, it may have a y-shape etc. The design of the at least one strut 105 may be dependent on the optimal lift force and aerodynamic properties that is required. This is illustrated in **Figure 4a** and **Figure 4****b.** Figure 4a illustrates a strut 105 seen from the back, and Figure 4b illustrates a strut 105 seen from the top.

The at least one strut 105 may be an airfoil shaped strut. When the at least one strut 105 is an airfoil shaped strut it may reduce the load on the device which the turbine 100 is assembled in, such as e.g. the frame 601 which will described in more detail below.

The strut 105 may be made out of drawn stainless steel tubes stamped with fittings.

### First and second disk

In some embodiments, the rotor comprises a **first disk 110a** arranged at the first end 115a of the at least one blade 101 and a **second disk 110b** arranged at the second end 115b of the at least one blade 101. The first and second disks 110a, 110b may be substantially circular disks. A disk may also be referred to as a band, a belt etc. The first and second disks 110a, 110b may be connected to the rotor by welding, screwing or other types of suitable connection means.

The first and second disks 110a, 110b may secure the required rigidity of the turbine 100, they reduce the risk of vibration of the at least one blade 101 and withstand dynamic load conditions and fatigue.

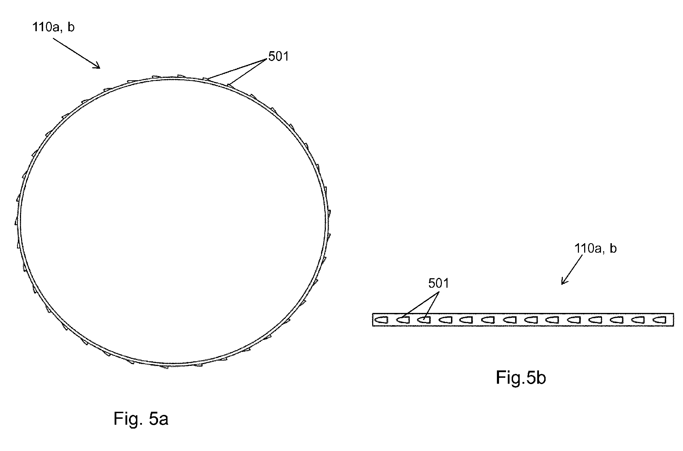

At least one of the first and second disks 110a, 110b comprises at least one **protrusion 501** having a shape which causes the turbine 100 to change from stand still to rotation when exposed to an amount of fluid flow, as illustrated in **Figures 5a** and **Figure 5****b.** Figure 5a shows a top view of a disk 110a, 110b and Figure 5b shows a side view of a disk 110a, 110b. In the embodiment shown in Figures 5a and 5b, the disk 110a, 110b has a plurality of protrusions 501 evenly distributed around the circumference of the disk 110a, 110b, however any suitable number of protrusions 501 is applicable. The at least one protrusion 501 may be formed using a combination of stamping and embossing of the disk. The at least one protrusion 501 may for example have the form of a triangle or pyramid. The disk 110a, 110b comprising the at least one protrusion 501 then works as a starter to set the turbine 100 in motion. The at least one protrusion 501 may also contribute to an increased rigidity of the turbine 100. The protrusions 501 may also be referred to as blades, fins etc.

The first and second disks 110a, 110b may comprise stainless steel.

### Frame

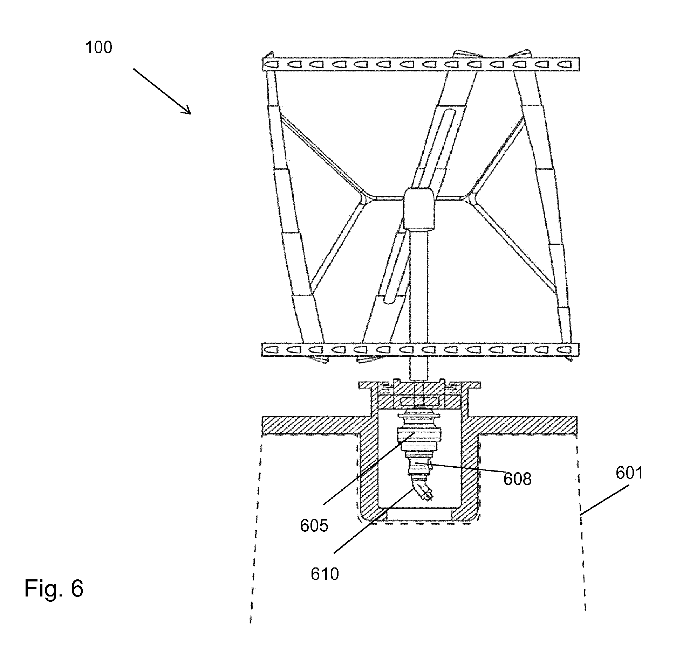

In some embodiments, the turbine 100 is arranged to being assembled in a frame 601, as seen in **Figure 6****,** whereby the turbine 100 and the frame form an integral unit. With the frame 601, the turbine 100 may be mounted on ground and lifted as one piece to the tower (not shown). Another alternative way of mounting the turbine 100 on the tower is to mount each separate component on the tower 100 one at a time, e.g. starting with lifting the shaft 103 onto the tower with e.g. a crane, then lifting the strut 105, then lifting each blade 101 etc. This is a large number of lifting operations compared to one lifting operation when the turbine 100 is assembled in the frame 601. When a turbine 100 in use needs maintenance, this could also easily be performed by lifting down the whole frame 601 and performing the maintenance on ground. The frame 601 may provide pre-mounting of all components of the turbine 100 in e.g. a factory or at ground for balancing and various tests before the turbine 100 is lifted on top of the tower.

Figure 6 further illustrates that the turbine 100 may comprise components such as for example a **gearbox 605,** a **hydraulic pump 608,** a **motor 610** and a generator (not shown). These components may also be assembled in the frame 601.

### System of turbines

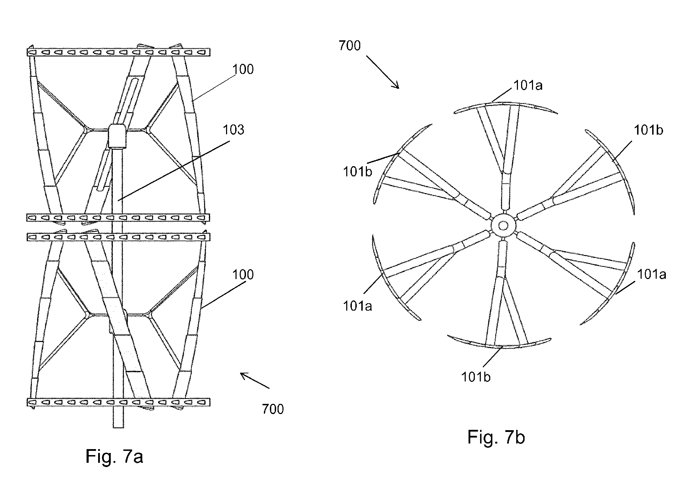

In some embodiments, the turbine 100 is arranged to be connected to another turbine 100. This may be referred to as a **system 700** comprising a plurality of turbines 100 and is illustrated in **Figure 7a** and **Figure 7****b.** Figure 7a shows a side view of a system 700 comprising two turbines 101, however any other suitable number of turbines 101 may be comprised in the system 700. Figure 7b shows a top view of the system 700. In such a system 700, the plurality of turbines 100 are connected together via a central point, i.e. the plurality of turbines 100 has a common central point. The central point may be located on the central shaft 103, i.e. the plurality of turbines 100 may have a common central shaft 103. In such a system 700, the plurality of turbines 100 have a common central shaft 103, as seen in Figure 7a.

The blades 101 on each turbine 100 may be horizontally shifted in relation to the blades 101 of the adjacent turbine 100, which is clearly shown in the top view of the system 700 in figure 7b. In figure 7b, the blades with the reference number 101a are comprised in one turbine 100, and the blades with the reference number 101 b are comprised in an adjacent turbine 100. For example, if two turbines 100 each have six blades 101, each blade 101 operate as being comprised in a turbine 100 with in twelve wings (6+6=12). The shifting of the blades 101 may provide a smoother rotation of the turbine 100.

In an embodiment of the system 700, not all disks 110a, 110b on all turbines 100 necessarily have at least one protrusion 501. For example, only the top turbine 100 may comprises at least one protrusion 501 on its first disk 110a, and the remaining disks on the top turbine 100 and the other turbines 100 comprised in the system 700 do not comprise any protrusions 501. In another example, only the bottom turbine 100 (the turbine closest to the tower) may comprise the at least one protrusion 501 on its second disk 110b. In a further example, the first disk 110a of the top turbine 100 comprises at least one protrusion 501 and the second disk 110b of the bottom turbine 100 comprises at least one protrusion 501. In other examples, all disks 110a, 100b on all turbines 100 comprised in the system 700 comprise at least one protrusion 501.

An advantage of stacking a plurality of turbines 100 on each other is that it is easier and more cost effective to produce several identical relatively small turbines compared to producing one large turbine. For example, it is easier and more cost effective to produce six blades each of 5m in length (which in total will be 10m when two such turbines 100 are connected together) compared to three long blades 101 each of 10m in length. A further advantage of stacking a plurality of turbines 100 on each other is that the solidity is kept low. Solidity is a measure of a total wing area per turbine area. Two turbines 100 may also be seen as more compact compared to a large turbine with twelve blades 101.

### Segment

The segment 201 will now be described in detail with reference to **Figure 8a, Figure 8b** and **Figure 8c****.** As mentioned above, the segment 201 comprises a core metal material 301 arranged between a non-corrugated metal sheet 303 and a corrugated metal sheet 305. The dotted sections in figures 8a, 8b and 8c represent the core metal material 301. A segment 201 may also be referred to as a section, part, sector, etc.

Figure 8a illustrates the segment 201 before the corrugated metal sheet 305 obtains its corrugated shape, i.e. when the metal sheet 305 is a plane metal sheet. The corrugated metal sheet 305 may obtain its corrugated shape before arranging the core metal material 301 between the sheets 303, 305 or after arranging the core metal material 301 between the sheets 303, 305. Figure 8b illustrates the segment 201 after the corrugated metal sheet 305 has been corrugated. The corrugated metal sheet 305 may be corrugated by using hydroforming. The corrugated metal sheet 305 comprises crests and troughs. Welded seams may be arranged at the troughs of the corrugated metal sheet 305, and the core metal material 301 may be arranged at crests of the corrugated metal sheet 305.

A segment 201 may be arranged to be connected to at least one other segment 201.

The segment 201 may be made of stainless steel sheets and laser welds, thus obtaining an ultra-light stainless steel sandwich segment which makes it suitable to be utilized in e.g. a turbine 100. The non-corrugated metal sheet 303 and the corrugated metal sheet 305 may be cold rolled stainless steel surfaces which are hydrophobic. The hydrophobic property of the non-corrugated metal sheet 303 and the corrugated metal sheet 305 provides e.g. that water drops easily and quickly leaves the sheets 303, 305. A short contact time between the water and the sheets 303, 305 prevent icing at cold air temperatures.

An example segment 201 of for example 1 m x1 m may weigh for example 3kg. The ultra-light stainless steel sandwich segment 201 may be used for light weighting of a variety of applications in aircrafts, train and car bodies, boat hulls, turbine blades and many other applications.

The metal sheets 303, 305 in the segment 201 may be separated by laser welding, which ensures the load transfer between the sandwich segment constituent parts. The result is a sandwich segment 201 with very high bending stiffness and strength to weight ratios. The segment 201 is perfectly well suited for work hardening during forming (e.g. hydroforming or electrohydraulic forming) in order to improve its internal strength.

The core metal material 301 may comprise a stainless steel powder, a solid stainless steel string etc., i.e. any suitable metal comprising stainless steel which easily may be formed into a suitable structure.

The core metal material 301 may be arranged as a lattice structure, i.e. it may be a core metal material lattice structure. As mentioned above, a lattice structure is intended to mean any regular or non-regular framework of crossing or non-crossing metal strips, whereby a strip may be of any uniform or non-uniform shape and/or thickness. The core metal material lattice structure does not necessarily fill the space between the non-corrugated metal sheet 303 and the corrugated metal sheet 305, but may comprise voids or pores between the sheets 303, 305. The lattice structure may also be referred to as a pattern. The core metal material 301 may be a grid of core metal material 301 as seen in figure 3c, or any other suitable lattice structure.

The core metal material 301 may have a height of for example 2mm. Each of the non-corrugated metal sheet 303 and the corrugated metal sheet 305 may have a thickness of for example 0,2mm. At the crests, the segment 201 may have a total thickness of 2*0.2mm+2mm=2.4mm, which is a relatively thin segment 201 but with high stiffness and stability.

As mentioned above, the core metal material 301 may comprise a plurality of ridges, i.e. the core metal material 301 is arranged as strips between the corrugated metal sheet 303 and the non-corrugated metal sheet 305, it may be a matrix of the core metal material 301 etc. The core metal material lattice structure may be determined by the rigidity and strength required for the complete segment 201

The segment 201 may be arranged to be shaped with an airfoil shape, as illustrated in Figure 8c. To form a segment 201 with an airfoil shape, the substantially plane segment 201 is bent to a pillow or substantially circular form and the ends of the segment 201 are welded together using e.g. laser welding. The ends provide the sharp trailing edge of the airfoil shaped segment 201. The pillow is then formed in order to obtain the airfoil shape by using e.g. hydroforming with a highly pressurized fluid to form the metal, by using electrohydraulic forming or by using any other suitable technique for forming the segment 201 with an airfoil shape. The hydroforming or electrohydraulic forming process may provide both the airfoil shape of the segment 201 and at the same time add structural stiffness and strength to the segment 201 through work hardening in order to maximize the global strength of the final segment 201.

As mentioned earlier, a blade 101 may comprise at least one airfoil shaped segment 201. A blade 101 which comprises at least one airfoil shaped segment 201 with its global structural stiffness, from segment 201 properties as well as from work hardening during the forming process, will combine to withstand and distribute the cyclic loading over wide sectors of the turbine rotation. The blade 101 may as well resist the vibrations caused by the cyclic dynamic loading generated from the variable angle of attack in rotation. In an embodiment where the fluid flow is wind, the cyclic dynamic loading is an aerodynamic loading. Vibration due to unbalance may be dealt with during at least one of manufacture, assembly and installation.

The segment 201 may be a lightweight stainless steel sandwich that is cost-effective and that allows for advanced forming and welding.

An example of an airfoil shaped segment 201 may be a cambered and twisted - Wortman Airfoil FX83-W-1 08 with a cord length of 500 mm. The cord length is the distance from the leading edge to the trailing edge of the airfoil shaped segment 201. The Wortman airfoil is just an example, and any other suitable airfoil shapes are also applicable.

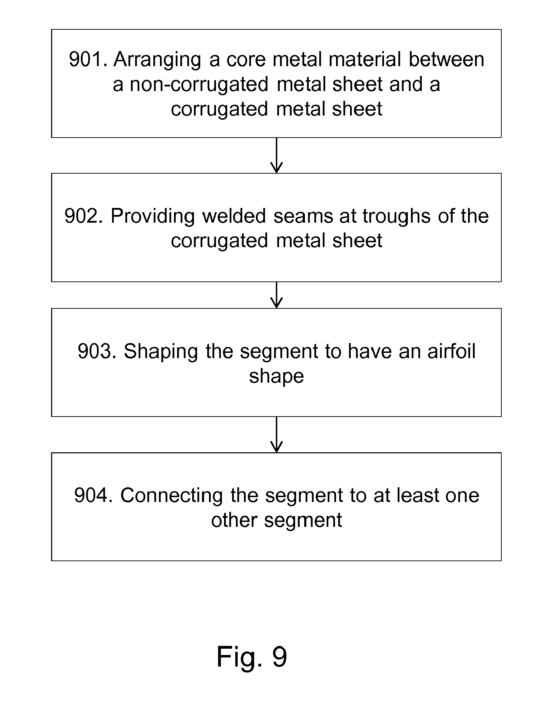

A method for manufacturing the segment 201 will now be described with reference to **Figure 9.** Figure 9 is a flow chart illustrating embodiments of a method for manufacturing the segment 201. The method comprises the following steps, which steps may be performed in any suitable order than described below:

### Step 901

Arranging the core metal material 301 between the non-corrugated metal sheet 303 and the corrugated metal sheet 305. The core metal material 301 may be arranged at crests of the corrugated metal sheet 305. The core metal material 301, the non-corrugated metal sheet 303 and the corrugated metal sheet 305 may comprise stainless steel.

In some embodiments, the core metal material 301 is arranged in a lattice structure.

In some embodiments, the corrugated metal sheet 305 obtains its corrugated shape prior to arranging the core metal material 301 between the non-corrugated metal sheet 303 and the corrugated metal sheet 305. In other embodiments, the corrugated metal sheet 305 obtains it corrugated shape after arranging the core metal material 301 between the non-corrugated metal sheet 303 and the corrugated metal sheet 305.

For example, step 901 may be as follows when the corrugated metal sheet 305 obtains its corrugated shape after arranging the core metal material 301 between the non-corrugated metal sheet 303 and the corrugated metal sheet 305: The core metal material 301 may first be arranged on the non-corrugated metal sheet 303. Then, the corrugated metal sheet 305 (not having obtained its corrugated shape yet) may be arranged on the non-corrugated metal sheet 303 so that the core metal material 301 is arranged between the non-corrugated metal sheet 303 and the corrugated metal sheet 305. The corrugated metal sheet 305 is then deformed to obtain its corrugated shape so that it conforms to the core metal material 301. The non-corrugated metal sheet 303 is maintained substantially plane.

For example, step 901 may be as follows when the corrugated metal sheet 305 obtains is corrugated shape prior to arranging the core metal material 301 between the non-corrugated metal sheet 303 and the corrugated metal sheet 305: The core metal material 301 may first be arranged on the non-corrugated metal sheet 303. Then, the corrugated metal sheet 305 (having obtained its corrugated shape) may be arranged on the non-corrugated metal sheet 303 so that the core metal material 301 is arranged between the non-corrugated metal sheet 303 and the corrugated metal sheet 305.

### Step 902

This is an optional step. In some embodiments, providing welded seams at troughs of the corrugated metal sheet 305.

### Step 903

This is an optional step. Shaping the segment 201 to have an airfoil shape. The non-corrugated metal sheet 303 is an outer surface of the airfoil shaped segment 201 and the corrugated metal sheet 305 is an inner surface of the airfoil shaped segment 201.

### Step 904

This is an optional step. Connecting the segment 201 to at least one other segment 201.

Two example embodiments of the turbine 100 and two example embodiments of the system 700 will now be described with reference to tables 1-4.

Table 1 below represents a turbine 100 with an effect of 10kW, having a diameter of 5m and having four blades 101. Table 2 represents a system 700 comprising two turbines 100, turbine A and turbine B, each having an effect of 10kW, a diameter of 5 m and each having four blades 101. As may be seen from the two tables 1 and 2 below, the system 700 comprising two turbines 100 in table 2 has double the amount of effect compared to the single turbine 100 in table 1. For an inlet velocity of 7m/s and a Tip Speed Ratio (TSR) of 2, the turbine 10kw has a torque of 200Nm and the turbine 20kW has a torque of 400Nm. For an inlet velocity of 7m/s and a TSR of 3, the turbine 10kw has a torque of 450Nm and the turbine 20kW has a torque of 9000Nm.

**Table 1**

| **Type** | **Turbine 10kW** |
|---|---|
| **Turbine effect kW** | 10kW |
| **Turbine diameter** | 5m |
| **Turbine height** | 5m |
| **Number of blades** | 4 |
| **Blade area** | 4*2.5m2= 10m2 |
| **7m/s/TSP 2** | 200Nm |
| **7m/s/TSP 3** | 450Nm |
| **Tower height average site** | 20-40m |

**Table 2**

| **Type** | **Turbine 20 kW** |
|---|---|
| **Turbine effect kW** | 20kW |
| **Turbine diameter** | 5m |
| **Turbine A height** | 5m |
| **Turbine B height** | 5m |
| **Number of blades, turbine A** | 4 |
| **Number of blades, turbine B** | 4 |
| **Blade area, turbine A** | 4*2.5m2= 10m2 |
| **Blade area, turbine B** | 4*2.5m2= 10m2 |
| **Total blade area, A&B** | 20m2 |
| **7m/s/TSP 2** | 400Nm |
| **7m/s/TSP 3** | 900Nm |
| **Tower height average site** | 20-40 |

Simulations have shown that for a turbine 100 with a diameter of 5m, an increase of the number of blades 101 from for example three to four blades 101 does not result in any significant increase in output power, however there is a significant lower torque fluctuation for a turbine 100 with four blades 101 compared to three blades 101. A turbine 100 with four blades 101 has shown to have a positive torque for a whole revolution for TSR 2, which will stabilize the startup of the turbine 100.

Table 3 below represent turbine 100 with effect of 50kW, with a diameter of 11 m and comprising six blades 101. Table 4 represents a system 700 comprising two turbines 100, turbine A and turbine B, each having an effect of 50kW, each having a diameter of 11 m and each comprising six blades 101. As may be seen from the two tables 3 and 4 below, the system 700 comprising two turbines 100 in table 4 has double the amount of effect compared to the single turbine 100 in table 3. For an inlet velocity of 7m/s and a TSR of 3, the turbine 50kw has a torque of 4772Nm and the turbine 100kW has a torque of 9540Nm.

**Table 3**

| **Type** | **Turbine 50kW** |
|---|---|
| **Turbine effect kW** | 50kW |
| **Turbine diameter** | 11m |
| **Turbine height** | 5m |
| **Number of blades turbine** | 6 |
| **Blade area** | 6*2.5m2= 15m2 |
| **7m/s/TSP 3** | 4772Nm |
| **Tower height average site** | 30-40m |

**Table 4**

| **Type** | **Turbine 100 kW** |
|---|---|
| **Turbine effect kW** | 100kW |
| **Turbine diameter** | 11m |
| **Turbine A height** | 5m |
| **Turbine B height** | 5m |
| **Number of blades, turbine A** | 6 |
| **Number of blades, turbine B** | 6 |
| **Blade area, turbine A** | 6*2.5m2= 15m2 |
| **Blade area, turbine B** | 6*2.5m2= 15m2 |
| **Total blade area, A&B** | 30m2 |
| **7m/s/TSP 3** | 9540Nm |
| **Tower height average site** | 30-40m |

Simulations have further shown that for a turbine 100 with a diameter of 11 m, a turbine 100 with six blades 101 may be approximately 30% more efficient at TSR 3 than the turbine 100 with four blades 101. A turbine 100 with six blades 101 may be approximately 50% more efficient at TSR 2 than the turbine 100 with four blades 101. There are lower fluctuations of the torque for the turbine 100 with six blades 101, especially for TSR 2, which will stabilize the startup of the turbine 100.

The components of the turbine 100 comprise stainless steel, i.e. the whole turbine 100 comprises the same type of material.

The embodiments herein provide a turbine 100 which has a low weight due to the segment 201, it has a stiff construction, it is easy to run and to brake. A stiff construction may withstand powerful fluid flows. Another advantage of the embodiments herein is that the turbine 100 may start even though the fluid flow is relatively small due to the at least protrusion 501 on at least one of the first and second disks 110a, 110b.

The embodiments herein are not limited to the above described embodiments. Various alternatives, modifications and equivalents may be used. Therefore, the above embodiments should not be taken as limiting the scope of the embodiments, which is defined by the appending claims.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

It should also be emphasised that the steps of the methods defined in the appended claims may, without departing from the embodiments herein, be performed in another order than the order in which they appear in the claims.

## Claims

1. A turbine (100) comprising a rotor that is arranged to rotate in a plane that is perpendicular to the surface on which the turbine (100) is mounted when in use,
wherein the rotor comprises at least one blade (101) joined to a central point of the rotor by at least one strut (105), and wherein the at least one blade (101) comprises at least one airfoil shaped segment (201).

2. The turbine (100) according to claim 1, comprising a shaft (103), and wherein the central point of the rotor is located on the shaft (103).

3. The turbine (100) according to any one of claims 1-2, wherein the at least one blade (101) comprises a first end (115a) and a second end (115b),
wherein the rotor comprises a first disk (110a) arranged at the first end (115a) of the at least one blade (101) and a second disk (110b) arranged at the second end (115b) of the at least one blade (101),
and wherein at least one of the first and second disks (110a, 110b) comprises at least one protrusion (501) having a shape which causes the turbine (100) to change from stand still to rotation when exposed to an amount of fluid flow.

4. The turbine (100) according to any one of claims 1-3, wherein the at least one airfoil shaped segment (201) comprises a core metal material (301) located between a non-corrugated metal sheet (303) and a corrugated metal sheet (305), and wherein the non-corrugated metal sheet (303) constitutes an outer surface of the airfoil shaped segment (201) and the corrugated metal sheet (305) constitutes an inner surface of the airfoil shaped segment (201).

5. The turbine (100) according to any one of claims 1-4, wherein the at least one blade (101) is tilted with respect to said plane at an angle of up to 30°.

6. The turbine (100) according to any one of claims 1-5, wherein the at least one strut (105) is a radial strut.

7. The turbine (100) according to any one of claims 1-6, wherein the at least one strut (105) has a y-shape.

8. The turbine (100) according to any one of claims 1-7, wherein the at least one strut (105) is an airfoil shaped strut.

9. The turbine (100) according to any one of claims 1-8, wherein the core metal material (301) is a core metal material lattice structure.

10. The turbine (100) according to any one of claims 1-9, arranged to being assembled in a frame (601), whereby the turbine (100) and the frame (601) form an integral unit.

11. A system (700) comprising a plurality of turbines (100) according to any one of claims 1-10,
wherein the plurality of turbines (100) are connected together via a central point, and wherein the at least one blade (101) of each turbine (100) is horizontally shifted in relation to the at least one blade (101) of the adjacent turbine (100).

12. A segment (201) comprising a core metal material (301) arranged between a non-corrugated metal sheet (303) and a corrugated metal sheet (305).

13. The segment (201) according to claim 12, wherein the core metal material (301) is arranged as a lattice structure.

14. The segment (201) according to any one of claims 12-13, comprising welded seams at troughs of the corrugated metal sheet (305).

15. The segment (201) according to any one of claims 12-14, wherein the core metal material (301) is arranged at crests of the corrugated metal sheet (305).

16. The segment (201) according to any one of claims 12-15, arranged to be shaped with an airfoil shape.

17. The segment (201) according to any one of claims 12-16, arranged to be connected to at least one other segment (201).

18. A method for manufacturing a segment (201), the method comprising:
*arranging* (901) a core metal material (301) between a non-corrugated metal sheet (303) and a corrugated metal sheet (305).

19. The method according to claim 18, further comprising:
*providing* (902) welded seams at troughs of the corrugated metal sheet (305).

20. The method according to any one of claims 18-19, wherein the core metal material (301) is arranged at crests of the corrugated metal sheet (305).

21. The method according to any one of claims 18-20, wherein the core metal material (301) is arranged as a lattice structure.

22. The method according to any one of claims 18-20, further comprising:
*shaping* (903) the segment (201) to have an airfoil shape, wherein the non-corrugated metal sheet (303) constitutes an outer surface of the airfoil shaped segment (201) and the corrugated metal sheet (305) constitutes an inner surface of the airfoil shaped segment (201).

23. The method according to any one of claims 18-22, further comprising:
*connecting* (904) the segment (201) to at least one other segment (201).
